# EUROPEAN PATENT APPLICATION

(11) **EP 1 300 783 A1**
(43) Date of publication of application: **09.04.2003**
(21) Application number: 01926132.0
(22) Date of filing: 07.05.2001
(51) Int. Cl.: G06F 17/60

(54) **CUMULATIVE POINT NOTIFYING METHOD**

(30) Priority: 16.05.2000 JP 2000148608
(71) Applicant: Sony Corporation, Tokyo 141-0001 (JP)
(72) Inventor: MARUYAMA, Akiko, c/o SONY MARKETING (JAPAN) INC., Tokyo 108-0074 (JP); HARANO, Tamaki, c/o SONY MARKETING (JAPAN) INC., Tokyo 108-0074 (JP); MATSUO, Kazuaki, c/o SONY MARKETING (JAPAN) INC., Tokyo 108-0074 (JP)
(74) Representative: DeVile, Jonathan Mark, Dr.
(86) International application number: JP0103819
(87) International publication number: WO01088787

(57) **Abstract**

This invention is directed to an information processing method, an information processing apparatus and a recording medium which are applied to on-line shopping in internet to have ability to realize positive utilization of user to notify, to user, in advance, accumulated point in the case where a series of information according to purchase of goods, etc. are notified.

## Description

### Technical Field

This invention relates to an information processing method, an information processing apparatus and a recording medium, and is applied to, e.g., on-line shopping in internet to notify, to user, in advance, accumulated point in the case where a series of information relating to goods purchase are notified, thereby making it possible to realize positive utilization of user.

### Background Art

Since access to a desired homepage can be provided even from remote place at a free time in the internet, the internet is utilized in shopping. In the shopping utilizing internet, similarly to the case where ordinary homepage is accessed, homepage which manages internet shopping is accessed to notify desired article and payment method, etc. in accordance with instruction of this homepage, thereby making it possible to purchase desired article.

In such an internet shopping, as in the case of selling goods or articles at ordinary store, points corresponding to amounts of money of purchased goods are offered to the purchaser of goods to provide various premiums by cumulation or accumulation of these points to thereby realize repetitive utilization. In addition, also with respect to goods permitted to undergo shopping and design of homepage, etc., various devices are made with a view to allowing user to carry out repetitive utilization.

In the homepage of such internet shopping, it is desirable to carry out positive utilization of user by distinction from traders who provide similar services.

### Disclosure of the Invention

This invention has been proposed in view of above-mentioned circumstances, and its object is to provide an information processing method, an information processing apparatus and a recording medium adapted so that information processing method is recorded which can realize positive utilization of user in connection with on-line shopping.

An information processing method and an information processing apparatus according to this invention proposed in order to attain such object include a notification step or notifying means for notifying offered object of point, and an accumulated point notification step or accumulated point notifying means for notifying an accumulated point in the case where this predetermined information is notified.

In a recording medium adapted so that an information processing method is recorded according to this invention, the information processing method includes a notification step of notifying offered object of point, and an accumulated point notification step of notifying an accumulated point in the case where the predetermined information is notified.

Further, an information processing method or an information processing apparatus according to this invention includes a point accumulating step or point accumulating means for calculating accumulated point in the case where predetermined information is notified to a server by information acquired from the server, and an accumulated point notification step or accumulated point notifying means for notifying this accumulated point to user.

An information processing method recorded with respect to an information recording medium according to this invention includes a point accumulating means of calculating accumulated point in the case where predetermined information is notified to a server by information acquired by the server, and an accumulated point notification step of notifying the accumulated point to user.

The information processing method and the information processing apparatus according to this invention include a notification step or notifying means for notifying offered object of point, and accumulated point notification step or accumulated point notifying means for notifying the accumulated point in the case where predetermined information is notified. Thus, it is possible to notify, in advance, to user, the number of accumulated points after utilization with respect to goods to be provided of point. As a result, even if point at that time is not stored, or even if point is not calculated, it is possible to easily select service in consideration of point. Thus, it is possible to realize positive utilization of user through positive utilization of reward or remuneration by point accordingly.

The information processing method recorded with respect to recording medium according to this invention includes a notification step of notifying offered object of point, and a accumulating point notification step of notifying accumulated point in the case where predetermined information is notified, thereby making it possible to provide recording medium adapted so that information processing method is recorded, which can realize positive utilization of user.

Further, the information processing method or the information processing apparatus according to this invention includes point accumulating step or point accumulating means for calculating accumulated point in the case where predetermined information is notified to server by information acquired from the server, and accumulated point notification step or accumulated point notifying means for notifying the accumulated point to user, thereby making it possible to notify, to user, the number of accumulated points after utilization with respect to goods and various services, etc. to be provided of point. Thus, it is possible to easily select these service etc. in consideration of point even if points at that time are respectively stored, or even if points are not respectively calculated. As a result, it is possible to realize positive utilization of user through positive utilization of reward by point accordingly.

In addition, this invention can provide the recording medium adapted so that there is recorded information processing method including point accumulating step of calculating accumulated point in the case where predetermined information is notified to a server by information acquired from the server, and accumulated point notification step of notifying the accumulated point to user, thereby making it possible to realize positive utilization of user.

Still further objects of this invention and more practical merits obtained by this invention will become more apparent from the description of embodiments which will be given below.

### Brief Description of the Drawings

FIG. 1 is a flowchart showing processing procedure of processing unit in shopping system to which this invention is applied.
FIG. 2 is a block diagram showing the configuration of the shopping system to which this invention is applied.
FIG. 3 is a block diagram showing the configuration of data base in the shopping server shown in FIG. 2.
FIG. 4 is a view used for explaining registered user data base of the data base shown in FIG. 3.

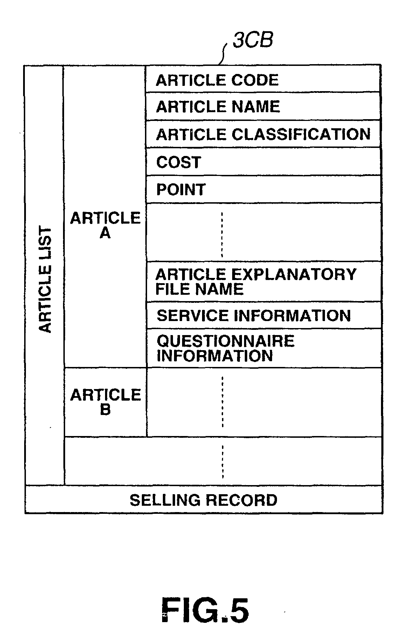

FIG. 5 is a view used for explaining goods data base of the data base shown in FIG. 3.
FIG. 6 is a view used for explaining premium data base of the data base shown in FIG. 3.
FIGS. 7 and 8 are flowcharts both showing membership registration processing in the processing procedure shown in FIG. 1.
FIG. 9 is a flowchart showing shopping processing in the processing procedure shown in FIG. 8.
FIG. 10 is a flowchart showing display processing of premium in the processing procedure shown in FIG. 9.
FIG. 11 is a plan view showing display screen by the processing procedure shown in FIG. 10.
FIG. 12 is a flowchart showing premium processing by the processing precedure shown in FIG. 9.
FIG. 13 is a flowchart showing advertisement processing in the processing procedure shown in FIG. 8.
FIG. 14 is a flowchart showing questionnaire processing in the processing procedure shown in FIG. 8.
FIG. 15 is a flowchart showing cooperative membership registration processing in the processing procedure shown in FIG. 8.
FIG. 16 is a plan view showing display screen in another example of this invention.

### Best Mode for Carrying Out the Invention

This invention will now be described by taking the example applied to shopping system utilizing internet with reference to the attached drawings.

### (1-1) Whole Configuration

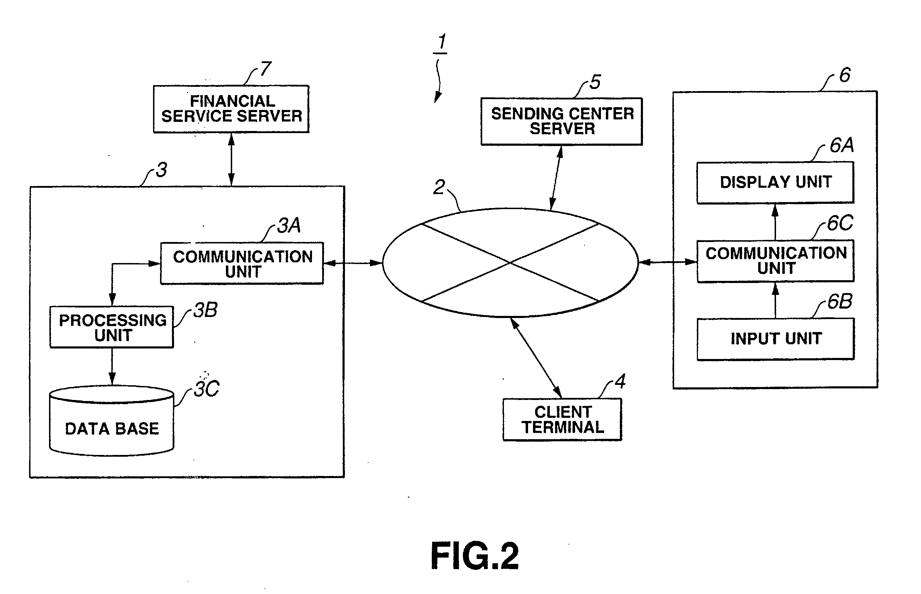

The shopping system 1 to which this invention is applied has a configuration as shown in FIG. 2. In this shopping system 1, a shopping server 3, a client terminal 4, a sending center server 5 and a user terminal 6 are connected through a network 2 which is internet, and a financial service server 7 and the shopping server 3 are connected through a private line.

In this example, the user terminal 6 is information terminal equipment such as personal computer installed in home, etc. of user, and television or pocket telephone connectable to internet, etc., and provides access to the shopping server 3 through a communication unit 6C such as modem, etc. in accordance with operation of an input unit 6B such as keyboard, or mouse, etc. corresponding to display screen of a display unit 6A to execute processing of on-line shopping by internet.

On the contrary, the shopping server 3 is computer system constituting electronic mall which is shopping site by internet, and is connected to the network 2 by a communication unit 3A to process access from the user terminal 6 or the client terminal 4 by a processing unit 3B which is computer to thereby update recording of data base 3C to output various information recorded in this data base 3C.

By this processing, the shopping server 3 records information of goods of shopping, information of premium of service by point and information of advertisement, etc. to the data base 3C according to notification from the client terminal 4 to offer these information to the user terminal 6 to accept purchase of goods. The shopping server 3 provides access to the financial service server 7 according to such purchase to execute processing of payment to further instruct the sending center server 5 to send out goods. In addition, in the case where purchased article is content which can be provided on-line, the shopping server 3 offers corresponding recording of the data base 3C to the user terminal 6. In this case, content which can be provided on-line is, e.g., game software, data of music for example, etc., and concert ticket, ticket for rental car or airline ticket, etc.

In these series of processing, as occasion demands, selling is notified to the client terminal 4, and advertisement information, etc. from the client terminal 4 accompanying with premium is offered to the user terminal 6 to execute charging processing with respect to offer of this advertisement information. In addition, with respect to display of premium or utilization of questionnaire, etc., processing of charging is similarly executed.

The client terminal 4 is computer of enterprise or store which provides goods, or premium offered by this shopping system 1. When the client terminal 4 provides access to shopping server 3 so that permission is obtained by processing of two-way certification, etc., it updates the content of data base 3C to thereby update goods or premium subject to shopping. Thus, in this shopping system 1, updating can be made at the side which provides premium as occasion demands with respect to not only goods but also premium of point to variously change premiums in a short cycle accordingly, thus making it possible to realize utilization of shopping site by user. In addition, when selling of goods is notified by the shopping server 3, etc., the client terminal 4 executes processing such as delivery, etc. as occasion demands.

In the case where advertisement information is offered to user in a manner accompanying with premium on various menu screens in this shopping system 1, when the client terminal 4 provides access to the shopping server 3 so that permission can be obtained by two-way certification, etc., it updates the content of the data base 3C to thereby update the content of advertisement information.

The sending center server 5 is server of the sending section of partial goods according to this shopping system 1, and serves to instruct sending of goods that user has purchased by notification from the shopping server 3.

The financial service server 7 is server of the financial service for processing settlement of goods purchase in this shopping system 1, and executes, as occasion demands, processing of credit and processing for charging from the bank account of user, etc. In addition, also with respect to enterprise, etc. which provides advertisement information, the financial service server 7 executes charging processing.

### (1-2) Shopping Server.

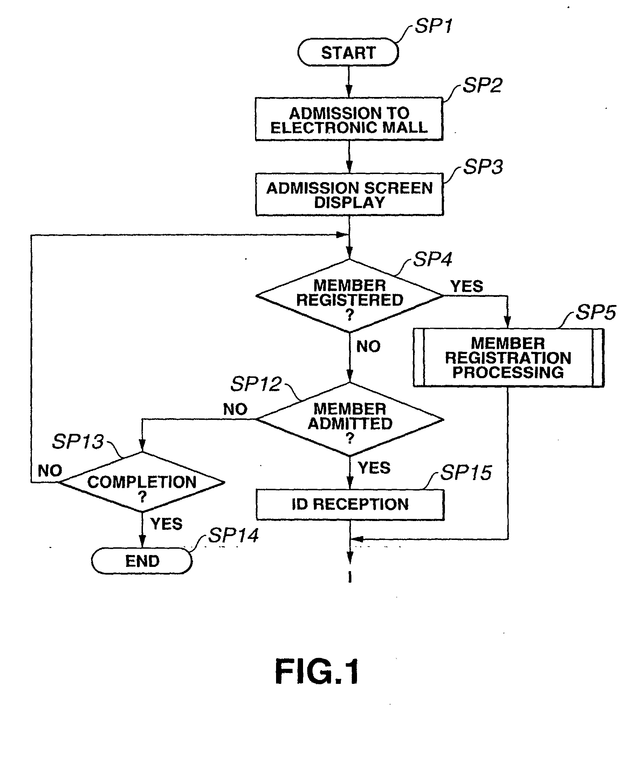

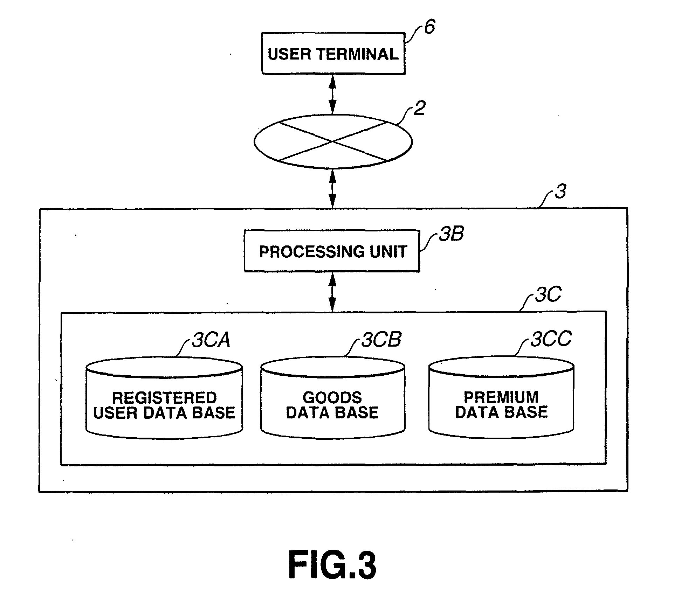

The shopping server 3 constituting the shopping system 1 shown in FIG. 1 constructs, as shown in FIG. 3, various data base necessary for processing relating to the above-described shopping to update the content as occasion demands.

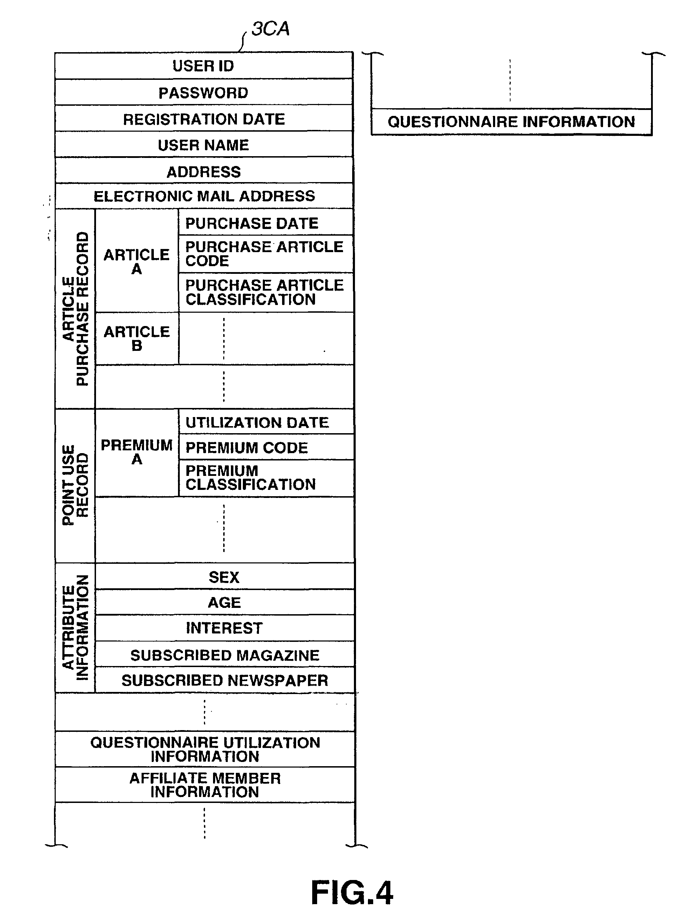

In such a data base 3C, registered user data base 3CA is mainly a data base for recording individual information of user registered in this shopping system 1. As one record is shown in FIG. 4, user names, pass-words, addresses, and the number of current points, etc. are recorded every users with user ID which is identification data of user being as reference. In this example, classification, article code and purchase date (year, month, day), etc. of each article which was purchased in the past are recorded as past article purchase record in the registered use data base 3CA, and classification of premiums and premium codes, etc. which were exchanged with point in the past are recorded as point utilization past record in the registered use data base 3CA. Further, age, sexuality, interest (hobby), title of subscribed newspaper and title of subscribed magazine, etc. necessary for market research which were acquired by procedure for application, etc. at the time of entry are recorded as attribute information in the registered user data base 3CA.

In the registered data base 3C, in the case where questionnaire regarding specific premium is answered by virtue of questionnaire processing which will be described later, and in the case where user is additionally registered as specific member by the affiliate membership processing, etc., information these situations is also recorded. In addition, in the registered user data base 3C, information of questionnaire item to desired users which are additionally requested by clients (hereinafter referred to as questionnaire information) are recorded, and answers to such information are also recorded at records of respective individual records.

On the contrary, the goods data base 3CB is data base of goods information provided by this shopping system 1, and is constituted by article list and information of history of selling. Among them, in the article list, article name, article classification, cost, number of points at the time of purchase and information necessary for processing of article logistics, etc. are recorded every article codes which are identification codes of articles. In this case, information necessary for processing of logistics of article is constituted by information necessary for instruction of charging and sending with respect to destination of order (supply) such as the sending center server 5 or the client terminal 4, etc., or link data of these information in the case where, e.g, article is object such as flower, book or compact disc, etc. In the case where article is music data by on-line delivery or computer program, etc., information for processing of logistics of article is constituted by information for instructing download thereof and information necessary for charging processing, etc., or link data of these information. In the case where article is ticket, the information necessary for processing of logistics of article is constituted by a series of information necessary for acquisition of seat number, etc. by connection to ticket administrator, information necessary for charging processing, etc. or link data of these information.

In the article data base 3CB, files of explanation of article by image data or text data, etc. for explaining article as occasion demands are additionally recorded. In the article list, file names of these files are recorded in corresponding articles. Further, in the article list, in the case where article is service (discount) article, etc. by special price and/or special point limited to a predetermined time period, time period of service and/or special point are recorded in combination as service information.

On the contrary, the history of selling record is record of selling of articles according to the article list. Every time articles are sold, selling code, selling date (year, month, day) and user ID are recorded. This article data base 3CB is adapted so that item of questionnaire (questionnaire information) relating to article with respect to desired user which is requested by client who provides article is recorded at record of corresponding article.

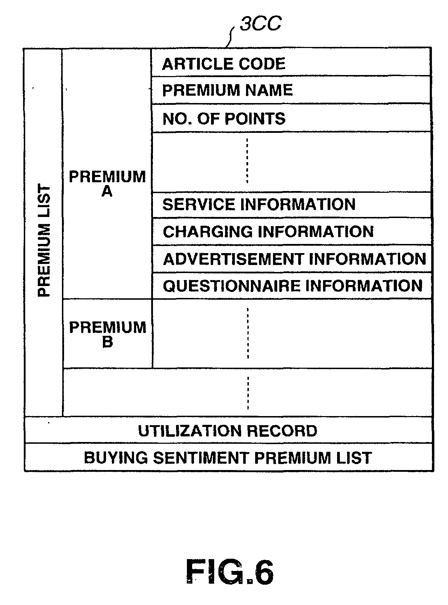

On the contrary, premium data base 3CC is data base relating to premium used for service of point, and is constituted by premium list, history of utilization, and ranking list of premium as shown in FIG. 6. In the premium list, the number of points which can acquire such premium, charging information and information necessary for exchange processing of premium, etc. are recorded. In this case, the charging information is information necessary for charging processing to premium provider, which is executed in response to offer of premium to user, and information necessary for exchange processing of premium is information such as destination of order (supply), etc. necessary for delivery procedure to user of premium and is constituted by information similar to information necessary for processing of article purchase.

In the premium list, in the case where premium is article which can be purchased at a discount using predetermined number of points, in the case of special service of limitation of fixed time period, or the like, such cost, number of points and effective time period, etc. are recorded as service information. Further, in the case where advertisement of premium can be offered to user by desire of premium provider, advertisement information is recorded. In this advertisement information, URL which is link data to advertisement of corresponding premium, or is link data to homepage of premium provider is recorded, and charging information to premium provider with respect to offer of advertisement and number of service points are recorded.

In the premium list, in the case where questionnaire is set at premium by desire of premium provider, questionnaire information is recorded. Here, with respect to questionnaire information, destination of link of questionnaire processing of corresponding premium, charging information by amount of money, etc. of charging executed with respect to person who sets questionnaire by collection of questionnaire, and number of service point are assigned.

On the contrary, history of utilization record is recording of selling of articles according to premium list. Every time premium is exchanged, premium code, utilization date (year, month and day) and user ID are recorded.

The ranking list of premium is formed by totalizing utilization past record by making reference to attribute information recorded in the registered user data base 3CA so that premiums which totally have high buying sentiment every weeks with, e.g., one week being as unit, premiums which have high buying sentiment respectively with respect to men and women, and premiums which have high buying sentiment with respect to specific user group.

The data base 3C is adapted to record image data, etc. in relation to respective articles and premiums in addition to these data bases 3CA to 3CC, thereby making it possible to offer corresponding image data of articles and premiums at the time of purchase of articles and at the time of exchange of premium, etc. Moreover, various information necessary for processing of the above-described advertisement and questionnaire are recorded, utilization personal record of questionnaire, answer result of questionnaire and totallized result of answer of questionnaire, etc. are recorded.

By such configuration, in the shopping system 1, contents of these data bases 3CA to 3CC are updated by the processing unit 3B in accordance with access from the client terminal 4 and the user terminal 6, and information of these data bases 3CA to 3CC are sent out to have ability to execute processing of a series of on-line shopping.

FIG. 1 is a flowchart showing processing procedure of outline of this processing unit 3B with respect to access from the user terminal 6. The processing unit 3B executes on-line shopping by execution of this processing procedure. In this example, in the following description, the processing unit 3B executes the following processing procedure by request of the user terminal 6 via link set on display screen offered to the user terminal 6. Moreover, while there are instances where illustration is not particularly made on the flowchart in the following processing procedure, switching of display to homepage, previous screen and subsequent screen is carried out at the user terminal 6 in accordance with operation at the user terminal 6, and processing procedure is switched in a manner corresponding to switching (change) of this display screen at the processing unit 3B.

Processing by the processing unit 3B changes from step SP1 to step SP2 according to access of the user terminal 6, at which request for admission of electronic mole by user is accepted. At the subsequent step SP3, a predetermined admission screen is sent out. In this case, this admission screen is caused to be of configuration in which menu such as member registration, explanation of utilization and admission into electronic mall, etc. are arranged at title, etc. of this on-line shopping.

When menu of the member registration is operated on the admission screen after information of the admission screen is sent to the user terminal 6, processing by the processing unit 38 changes from step SP4 to step SP5 because affirmative result is obtained at the subsequent step SP4. At this step, the processing unit 3B executes processing of member registration.

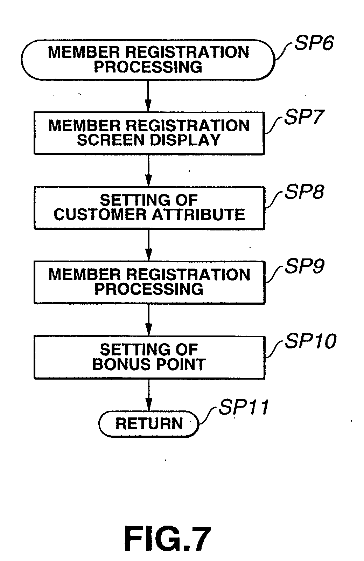

In the processing of the member registration here, processing by the processing unit 3B changes from step SP6 to step SP7 as shown in FIG. 7. The processing unit 3B sends out information of member registration screen to the user terminal 6 to thereby display the member registration screen on the user terminal 6 to thereby prompt user to carry out input of various information necessary for procedure of admission to the shopping system 1.

The processing unit 3B acquires, e.g., name, address and electronic mail address, etc. by operation of user at this member registration screen along with attribute information such as age, sexuality and interest, etc. at the subsequent step SP8. Further, when the processing unit 3B offers final confirmation screen to the user terminal 6 and operation of confirmation is obtained by user here, the processing unit 3B executes member registration processing at the subsequent step SP9. Here, this member registration processing is executed by notifying user ID to user to form new record by this user ID at the registered user data base 3CA and to record, onto new record, various information acquired at the step SP8.

At the subsequent step SP10, bonus point is recorded at this registered user ID. Thus, in this shopping system 1, with respect to service by point, admission is only made so that point is added. When the processing unit 3B records information of new members at the registered user data base 3CA in a manner as stated above, processing by the processing unit 3B returns from step SP11 to the original processing procedure.

When negative result is obtained at the step SP4, processing by the processing unit 3B changes from step the SP4 to step SP12. At this step, the processing unit 3B judges whether or not menu of member admission is operated on the admission screen. When the negative result is obtained at this step, processing changes to step SP13. At this step, the processing unit 3B judges whether or not operation of completion is executed at, e.g., the user terminal 6. When affirmative result is obtained at this step, processing changes to step SP14 to complete this processing procedure. On the contrary, when negative result is obtained at the step SP13, processing returns to the step SP3. At this time, in the case where other menu, e.g.; explanation of utilization, etc. is operated, the processing unit 3B executes corresponding processing, and processing by the processing unit 3B returns to the step SP3.

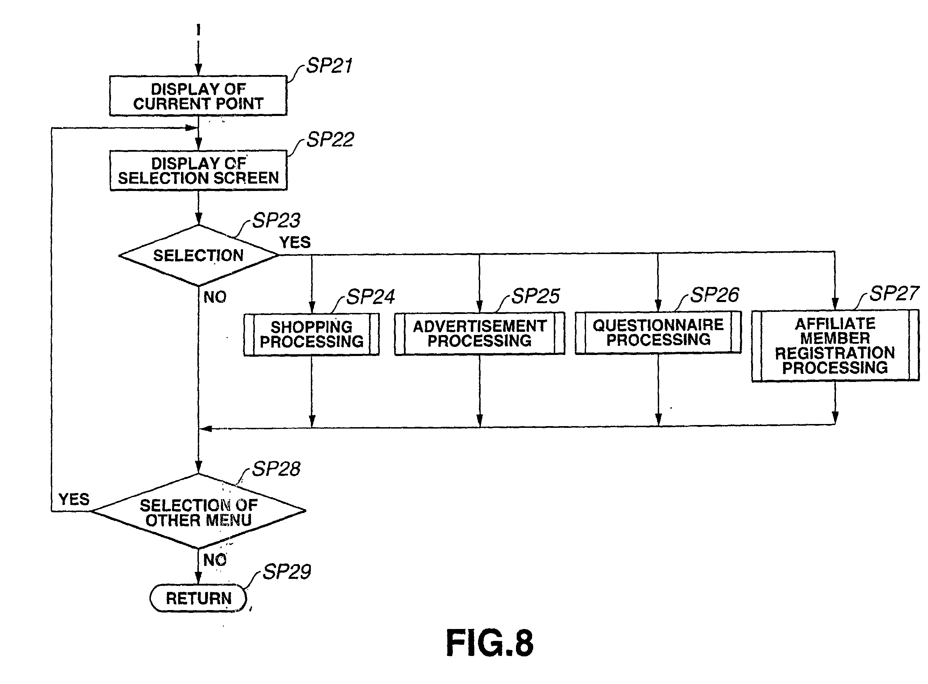

When the affirmative result is obtained at the step SP12, processing by the processing unit 3B changes from the step SP12 to step SP15. At this step, the processing unit 3B sends out input screen information of user ID to the user terminal 6. Thus, the processing unit 3B displays input screen of user ID on the user terminal 6 to acquire, from the user terminal 6, user ID notified to user at the time of registration by operation of user at this input screen. Thereafter, processing by the processing unit 3B changes to step SP21 of FIG. 8. After the processing unit 3B executes member registration processing of the step SP5, processing by the processing unit 3B directly changes to step SP21 of FIG. 8.

It is to be noted that, in this example, even if user does not acquire ID, he/she can be admitted into this shopping mall as guest member. In this case, processing by the processing unit 3B directly changes from the step SP12 to the step SP21.

At this step SP21, the processing unit 3B displays initial screen of shopping on the user terminal 6. Further, the processing unit 3B provides access to registered user data base 3CA based on user ID to detect current number of points of this user to display this current number of points on the initial screen of shopping. Thus, in this shopping system 1, appeal of point is made with respect to user to appeal to positive utilization of service by point.

Processing by the processing unit 3B changes to the subsequent step SP22 in response to operation of the user terminal 6 on this initial screen. At this step, various types of selection screens are displayed. In this case, the processing unit 3B offers, to the user terminal 6, selection screen of store or shop constituting shopping mall and selection screen of article classification, etc. sequentially in response to operation at the user terminal 6 to thereby display selection screen of article, etc. that user desires. In this case, the processing unit 3B displays current number of points also at these series of selection screens to thereby prompt positive utilization of service by point.

At the subsequent step SP23, the processing unit 3B judges whether or not any menu displayed on selection screen which is displayed in this way is selected. When the affirmative result is obtained at this step, the processing unit 3B executes processing corresponding to operated menu. Namely, in the case where menu relating to shopping is selected, processing by the processing unit 3B changes to step SP 24 to execute shopping processing for selling article selected by user. In the case where user focuses on the menu relating to advertisement, processing by the processing unit 3B changes to step SP 25 to execute advertisement processing which offers premium as advertised to user. In the case where user focuses on menu relating to questionnaire, processing by the processing unit 3B changes to step SP 26 to execute questionnaire processing. On the contrary, when user focuses on menu relating to cooperative member, processing by the processing unit 3B changes to step SP 27 to execute the affiliate member registration processing which is processing for acceptance of member of department store or credit company, etc. affiliated with this shopping mall.

When the processing unit 3B executes these processing or when negative result is obtained at the step SP 23, processing by the processing unit 3B changes to step SP 28 to judge whether or not other menu is selected. When affirmative result is obtained at this step, processing by the processing unit 3B returns to the step SP 22. On the contrary, when negative result is obtained, processing by the processing unit 3B changes to step SP 29 to return to the original processing.

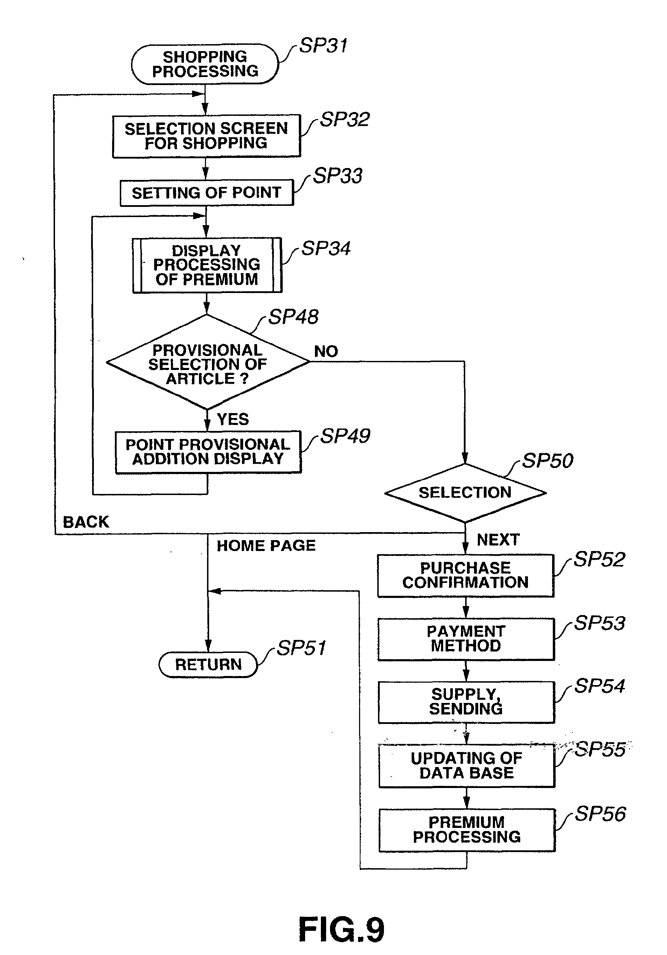

FIG. 9 is a flowchart showing shopping processing executed in this way. When the processing unit 3B starts shopping processing, processing by the processing unit 3B changes from step SP 31 to step SP 32 to display selection screen for shopping. In this case, articles in relation to classification that user has selected are displayed as a list by picture image and explanation on display screen for this shopping, and current number of points is further displayed thereon. Moreover, menus of provisional purchase, determination of purchase and explanation are arranged every respective articles. Thus, processing of provisional purchase and purchase can be executed by selection of these means and explanation of articles can be made. Menu such as switching of articles being displayed, etc. is displayed on this selection screen for shopping in addition to these displays, and the processing unit 3B switches display in response to operation of these menus.

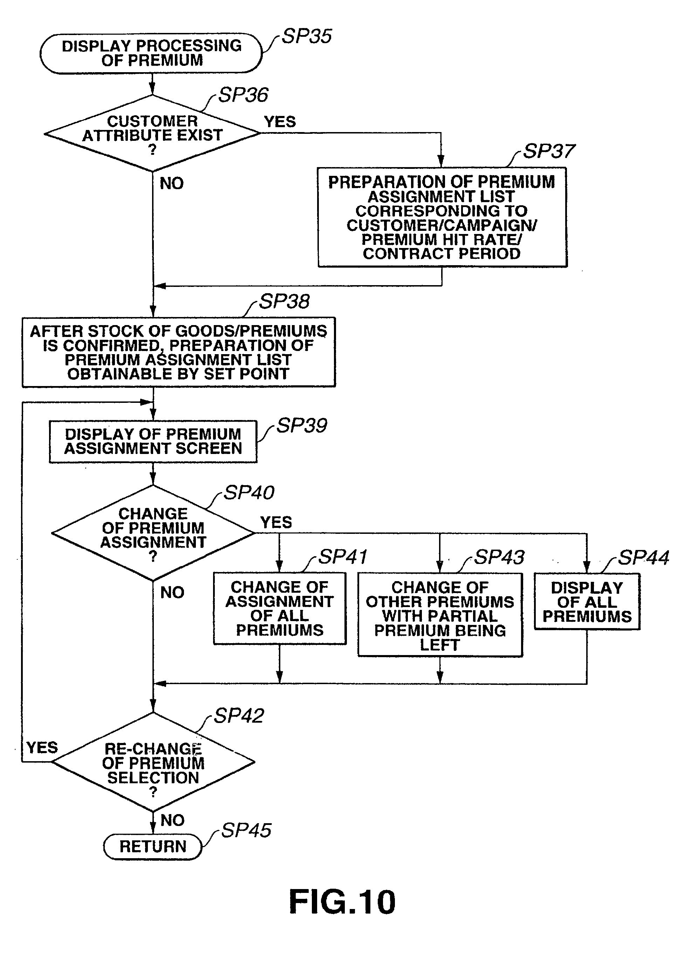

When the selection screen for shopping is displayed in this way, processing by the processing unit 3B changes to step SP 33. At this step, current point is set to point used for display of premium list. Thereafter, processing by the processing unit 3B changes to step SP 34 to execute display processing of premium. Here, the display processing of premium is processing for displaying premium which can be selected using set point, and is processing for notifying, to user, premium which can be provided using current point of user. In the display processing of this premium, as shown in FIG. 10, processing by the processing unit 3B changes from step SP 35 to SP 36 to judge whether or not attribute information is recorded with respect to user according to this user terminal 6 by access of the registered user data base 3CA.

When the affirmative result is obtained at this step, processing by the processing unit 3B changes to step SP 37 to prepare list so as to preferentially display premium suitable for this user by processing of premium list with this attribute information being as reference. In the case where, e.g., user is man, this list is formed so as to preferentially display premium for man from the category of premium. Moreover, similarly, in the case where user is young age, this list is formed so as to preferentially display premium which has buying sentiment for user of young age. At this time, with respect to premium set for a service time period, list is prepared in such a manner that rank of priority of display becomes high accordingly. Further, in the case where, e.g., user purchased many articles relating to personal computer in the past by making reference to utilization record, high buying sentiment list and recording of the past article purchase record of this user, list is prepared in a manner to preferentially display premiums relating to personal computer. In addition, also with respect to premium having the highest buying sentiment last week, list is prepared in a manner to preferentially display it.

When the list is prepared in this way, or when negative result is obtained at the step SP 36, processing by the processing unit 3B changes to step SP 38. At this step, stock of goods (articles) and premiums is confirmed by access, etc. of stock control (management) data base set in the data base 3C. Thereafter, premium which can be acquired using set point is selected from the list prepared at the step SP 37 to thereby prepare list of premiums which can be offered to user.

Processing by the processing unit 3B subsequently changes to step SP 39 to display premium assignment screen within current screen (selection screen for shopping) being displayed. In this case, this premium assignment screen is formed by displaying image of premium, number of points and predetermined button, etc. regarding predetermined number of premiums from high order of the list prepared at the step SP 38. Thus, in the shopping system 1, in this case, currently obtainable premiums are displayed on the screen for selecting goods or articles so that service using point can be positively utilized. At this time, premium suitable for user is selected with attribute information, past article purchase record and service of the point in the past being as reference to provide the selected one to thereby improve attraction of service by point accordingly.

When premium is displayed in this way, the processing unit 3B records notification of this premium in the premium data base 3CC. Thus, in this shopping system 1, in regular charging processing, premium provider is permitted to execute charging processing in accordance with the notified frequency in the future.

When the premium assignment screen is displayed in this way, processing by the processing unit 3B changes to step SP 40. At this step, the processing unit 3B judges whether or not button for switching display of premium is selected. In this case, in the embodiment, button for entirely changing display of premium, button for switching display only with respect to premium that user has selected and button for displaying all premiums as a list are displayed on the premium assignment screen. When the button for entirely changing display of premium is operated, processing by the processing unit 3B changes from step SP 40 to step SP41 to select again premium from the list prepared at the step SP 38 to switch display of premium on the premium assignment screen. Thus, processing by the processing unit 3B changes to step SP 42. On the contrary, in the case where the button for switching display only with respect to premium that user has selected is operated, the processing unit 3B similarly switches display except for premiums which have undergone marking by user. In addition, when the list display button is operated, list of premiums is displayed instead of display using image.

Also in such switching of display of premium, the processing unit 3B records information of premium notified by operation of user into the premium data base 3CC to thereby permit premium provider to execute charging processing in accordance with the notified frequency in regular charging processing in the future.

In such display of premium assignment screen, the processing unit 3B accepts selection of premium by user by operation of buttons set on display of respective premiums to accept change of the selected premium. When the negative result is obtained at the step SP 40, or when display is switched at step SP 41, SP 43 or SP 44, processing by the processing unit 3B changes to step SP42. The processing unit 3B judges whether or not premium is selected by user, or selection is changed. When the affirmative result is obtained at this step, processing by the processing unit 3B changes to step SP 39 to display again premium assignment screen. Thus, the shopping system 1 is adapted to accept selection of premium desired by user on display of currently obtainable premium.

In the case where premium is selected by user, the processing unit 3B displays for a second time premium assignment screen at step SP 39 so as to subtract point set at this premium from set point to display the remaining point, and reconstructs list of premiums offered to user by the remaining point as occasion demands. Processing by the processing unit 3B is caused to return to the step SP 39. Thus, not only additive processing of points by purchase of goods, but also subtractive processing of points in the case where point is used can be simplified.

When the negative result is obtained at step SP42, processing by the processing unit 3B changes to step SP45 to return to the original processing procedure. In this case, not only in the case where premium is selected by user, but also in the case where any premium is not selected, this processing procedure is completed to return to the original shopping processing.

When processing returns to the original procedure in this way (see FIG. 9), processing by the processing unit 3B changes to step SP48 to judge whether or not article is provisionally selected by user on selection screen for shopping. When the affirmative result is obtained at this step, processing by the processing unit 3B changes to step SP49. The provisional selection in this case is processing for accepting selection of article scheduled to be purchased by user, and corresponds to the work as if user transfer article into basket for shopping at a supermarket, etc. The processing unit 3B adds number of points of the provisionally selected article to current number of points at step SP49 to thereby calculate accumulated number of points in the case where this article scheduled to be purchased is purchased. Further, the calculated number of points is displayed on the selection screen for shopping, and processing by the processing unit 3B returns to the step SP34 using this point to execute display processing of premium.

It is to be noted that this provisional selection here is executed, e.g., in the case where user carries out drag-and drop operation of display of desired article with respect to display of basket, and in the case where user clicks display of desired article using mouse. In addition, processing for calculating accumulated number of points to carry out notification is executed along with display processing of premium also in the case where user focuses mouse on display of article, etc. by setting, etc. of application program for providing access to this homepage by user.

Thus, this shopping system 1 calculates accumulated number of points in the case where interesting article is purchased to notify it to user, thereby making it possible to eliminate complexity of point calculation and to easily select article in consideration of number of points. As a result, utilization of service by point is positively hastened accordingly. In addition, by such positive utilization of point, positive utilization by user of this shopping mall can be achieved.

Display processing of premium is executed again by point calculated in this way to thereby notify, to user, premium which can be acquired in the case where article is purchased to promote willingness to buy goods and to positively utilize service using point.

At the processing unit 3B for carrying out processing as described above, provisional selection of goods purchase by user is accepted by repetition of the steps SP34-SP48-SP49-SP34 to accumulate number of points every provisional section to notify premium which can be acquired to user. In these series of processing, it is possible to switch display of goods on the selection screen for shopping in response to operation of user to accept provisional selection of various goods and premiums by user. In certain circumstances, mouse is only operated to similarly notify accumulated number of points and exchangeable premium.

By these facts, the shopping server 3 is directed to an information processing apparatus adapted to accumulate number of points corresponding to information with respect to a series of notifications relating to purchase of goods which are predetermined information from the user-terminal 6 serving as terminal unit to offer premiums which are reward to user in accordance with the accumulated number of points, and constitutes offered object notifying means for notifying goods subject to offer of this point and constitutes accumulated point notifying means for notifying accumulated number of points in the case where this predetermined information is notified.

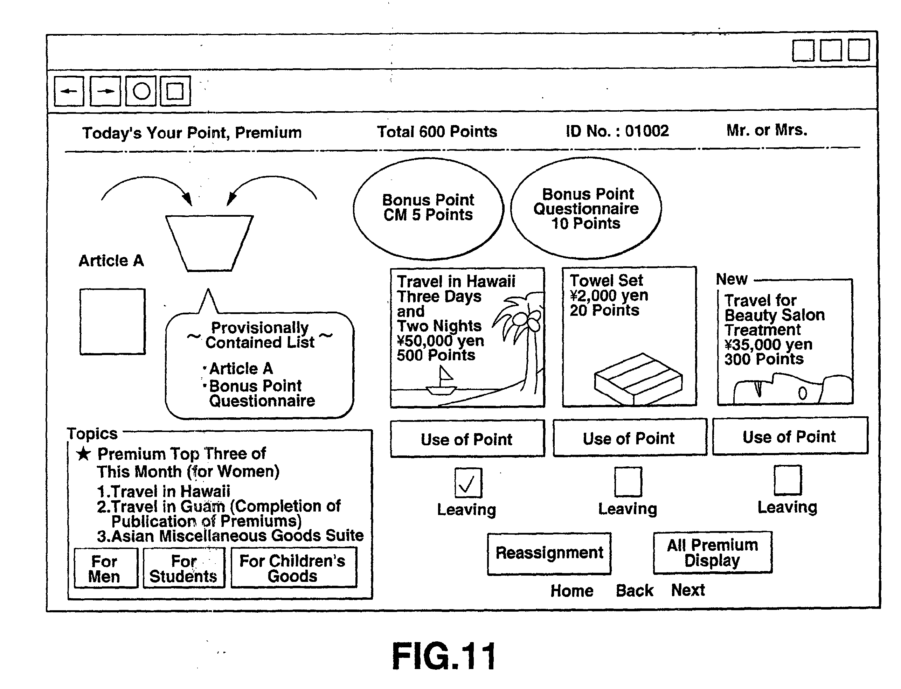

The processing unit 3B is adapted to switch selection screen for shopping according to subject display of article into display screen in which premium is caused to be principal shown in FIG. 11 by operation of user in such provisional selection of goods and premiums to thereby improve convenience of use in the processing of premium selection.

In this case, on the display screen in which premium is caused to be principal shown in FIG. 11, predetermined buttons are displayed, and message of "today's your number of points and premium" which is title of picture, accumulated number of points (600 points), user ID and user name are subsequently displayed. Further, article thrown into basket by provisional purchase is subsequently displayed along with image of the article and image of the basket, and list of goods is displayed at the lower portion of display of this basket. In addition, display indicating that bonus point by preview of advertisement and answer to questionnaire is added which will be described later is disposed, and premium is subsequently displayed.

On this display screen, it is displayed that travel in Hawaii by ordinary cost of 50,000 yen, towel set by ordinary cost of 2,000 yen and travel for beauty salon treatment by ordinary cost of 35,000 yen are respectively provided by 500 points, 20 points and 300 points, and character of "New" indicating new premium is displayed at display of travel for beauty salon treatment among these premiums.

On this display screen, menus of "Use of Point" are displayed at the lower portions of respective premiums to have ability to accept provisional selection of premium by selection of this menu. Further, messages of "Hold" are displayed along with check boxes, and switching of display can be stopped in connection with corresponding premium by check of the check box. Menus of reassignment and all premium display respectively corresponding to the above-described step SP41 and steps SP43, SP44 in FIG. 10 are displayed, and menus of return to homepage (Home), return to previous screen (Back) and advancement to the next (Next) are displayed at the lower side thereof.

On this display screen, best three of premiums which had high buying sentiment for user of women last week are displayed at the lower column of the left side, and menus for switching display into similar ranking with respect to men, students and children goods are displayed. The processing unit 3B processes history of utilization of premium recorded in the premium data base 3CC to thereby prepare this ranking to display it to thereby assist selection of premium by user, and to prompt positive activity of premium provider.

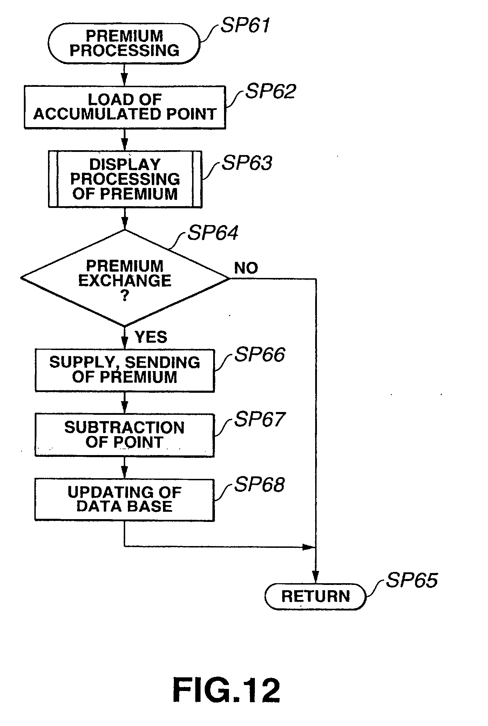

Although not shown in FIG. 12, in the case where URL of homepage is recorded at advertisement information of premium provider (see FIG. 6) on displays of premiums in such various types of selection screens, the processing unit 3B displays this URL. In addition, in the case where link of advertisement is recorded, icon for opening advertisement is displayed. Also by selection of these URL and icon, advertisement processing which is processing of the step SP25 of FIG. 8 is executed.

When menu of return (back) or next, etc. is operated while the processing procedure of steps SP34-SP48-SP49-SP34 is repeated in this way, processing by the processing unit 3B changes to step SP50 because the negative result is obtained by the step SP48. At this step, the processing unit 3B detects operation of menu. In the case where the menu of return (back) is selected, processing by the processing unit 3B returns the step SP32. On the contrary, in the case where menu of return (back) to homepage is operated, processing by the processing unit 3B changes to step SP51 to return to the original processing procedure. On the contrary, in the case where the menu of the next is operated, processing by the processing unit 3B changes to step SP52 to notify, to user, total amount of money with respect to goods that user has selected along with selected goods to accept confirmation of purchase from user.

In the case where confirmation is not obtained at this step, switching of display to the previous screen, etc. is switched, or change of article to be purchased is accepted as occasion demands. On the contrary, when confirmation is obtained by user, processing changes to step SP53 to accept input of payment method. Here, the processing unit 3B acquires, from the user terminal 6, a series of data necessary for payment processing in accordance with payment method notified from the user terminal 6. Thereafter, processing changes to step SP54. It is to be noted that in the case where the credit company is utilized in this payment method, the processing unit 3B is adapted to obtain confirmation by data exchange with the financial service server 7.

The processing unit 3B arranges for supply (order) and sending of goods purchased by user at this step SP 54, and updates data base 3C so as to correspond to purchase of goods at the subsequent step SP 55. Namely, with respect to registered user data base 3CA, number of points according to the article to be purchased is added to the recorded number of points up to that time to update point, and to update goods purchase record. In addition, with respect to goods data base 3CB, selling of article is recorded in the selling record. When the processing unit 3B updates the data base 3C in this way, it executes premium processing at the subsequent step SP 56. Thus, processing changes to step SP 51. In this case, the premium processing is a series of processing for exchanging point of desired user into premium.

FIG. 12 is a flowchart showing processing procedure in this premium processing. Since there might be the case where some users desire to acquire premium by making use of only point without purchasing any article, also in the case where a predetermined menu is selected on various selection screens, the processing unit 3B is adapted to directly start this processing procedure.

In this processing procedure, processing by the processing unit 3B changes from step SP61 to step SP62 to load accumulated number of points by the registered user data base 3CA at the step SP62 to execute display processing of premium by this loaded number of points at the subsequent step SP63. In this case, the display processing of premium is caused to be the same as the above-described display processing of premium in FIG. 9 except that premium assignment screen is displayed on exclusive premium selection screen in place of the selection screen for shopping, and is caused to be the same as the above-described display processing of premium except that premium assignment screen is displayed in a manner to reflect selection of this premium in the case where user selects premium before the above-described article is purchased.

Thus, the processing unit 3B accepts again selection of premium by user by accumulated number of points after purchase of goods. In addition, in the case where premium is selected before purchase of goods, the processing unit 3B accepts supplementary selection of premium, and accepts change of premium.

When change of selection of premium is accepted in this way, the processing unit 3B judges at step SP64 whether or not menu of premium exchange is selected by user. When the negative result is obtained at this step, processing by the processing unit 3B changes to step SP65 to complete this processing procedure. On the contrary, when the affirmative result is obtained, processing by the processing unit 3B changes to step SP66 to execute, at the step SP66, procedure of supply (order) and sending with respect to the article that user has selected. Further, at the subsequent step SP67, number of points is subtracted by point corresponding to the fact exchanged into premium. At the subsequent step SP68, recording of the data base 3C is updated. Thereafter, processing changes to the step SP65. Namely, the processing unit 3B changes point of corresponding user ID into point calculated at the step SP67 with respect to the registered user data base 3CA to record point use record. On the contrary, with respect to the premium data base 3CC, utilization record is updated. Thus, in the shopping system 1, it is possible to use point immediately after purchase at the time of purchase of goods. Thus, point can be easily utilized accordingly, and service by point can be positively utilized.

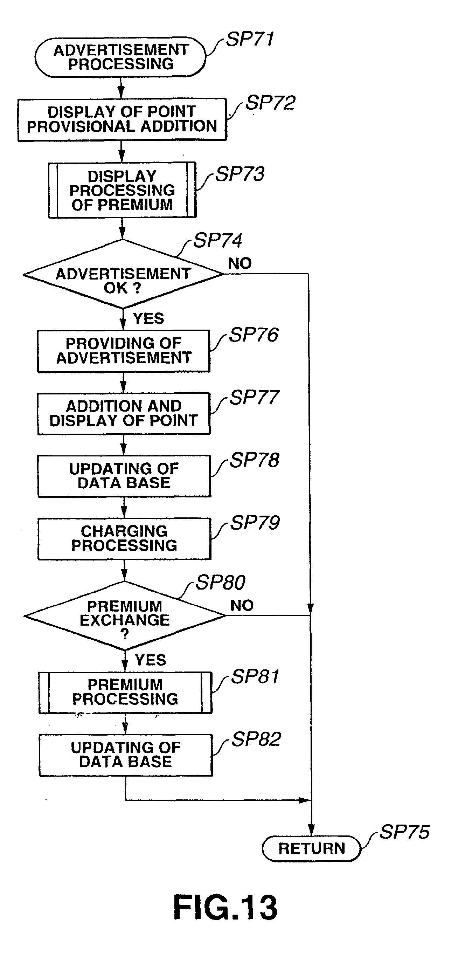

On the contrary, FIG. 13 is a flowchart showing advertisement processing. The processing unit 3B displays URL and a predetermined menu in the above-described display of premium, etc. When these URL and predetermined menu are focused by operation of mouse by user, etc., processing by the processing unit 3B changes from step SP71 to step SP72. In this case, the processing unit 3B displays message to the effect that bonus point is set with respect to preview of advertisement via these URL and menu to thereby improve willingness of advertisement preview by user. Moreover, at step SP49, similarly to the above-described fact at step SP49, number of points of this selected advertisement is added to current number of points to calculate accumulated number of points in the case where information which is notification of preview of advertisement is notified. Further, this calculated point is notified to the user terminal 6 to display it, and processing changes to step SP73 to execute display processing of premium by this point. In this case, display processing of this premium is executed similarly to the above-described display processing of premium in FIG. 10.

Thus, in this shopping system 1, such an approach is employed to notify accumulated number of points in the case where preview of advertisement is made to notify premium which can be provided by this accumulated point to hasten or promote preview of advertisement to thereby hasten or promote positive preview also with respect to advertisement to thereby realize positive utilization of shopping mall.

The processing unit 3B which carries out such a processing judges at the subsequent step SP74 whether or not user selects these URL and menu to thereby judge whether or not user acknowledges or understands preview of this advertisement. When the negative result is obtained here, processing by the processing unit 3B returns to step SP75 to return to the original processing procedure.

On the contrary, when these URL and predetermined menu are selected by user, processing by the processing unit 3B changes from step SP74 to step SP75. In the case where this advertisement is the one using by file recorded in the data base 3C at this step, data of corresponding file is sent out from the data base 3C to thereby offer advertisement to user. In addition, in the case where advertisement is the one using homepage of premium provider by URL, processing of the user terminal 6 side with this URL being as reference is executed to thereby offer advertisement to user.

When the processing unit 3B provides advertisement in this way, processing by the processing unit 3B changes to step SP77 to add number of service points to point that user holds in accordance with recording of advertisement information set to corresponding premium of premium data base 3CC to display added result on the user terminal 6. Further, processing by the processing unit 3B subsequently changes to step SP78 to update the content of the data base 3C so as to correspond to these series of processing. Namely, the processing unit 3B updates recording of point of corresponding user ID of the registered user data base 3CA by point calculated at the step SP77, and to record utilization of this advertisement. Thus, the shopping system 1 is adapted to add bonus point by preview of advertisement related to premium to allow user to be attractive also with respect to advertisement.

At the subsequent step SP 79, charging processing is executed with respect to this advertisement provider. Thereafter, processing changes to step SP 80. Thus, in this shopping system 1, link which can acquire advertisement which is information relating to premium is set, and charging processing is executed with respect to corresponding premium provider with respect to access via this link. Thus, also with respect to advertisement provided by the premium provider, contrivance of advertisement is urged or promoted by the premium provider so that the advertisement is attractive for user.

The processing unit 3B judges at the step SP 80 whether or not menu for using point is selected by user. When the negative result is obtained at this step, processing by the processing unit 3B changes to step SP 75 to return to the original processing procedure. On the contrary, when the affirmative result is obtained at the step SP80, processing by the processing unit 3B changes to step SP 81 to execute the same premium processing as the above-described premium processing in FIG. 12. Further, at the subsequent step SP 82, the content of the data base 3C is updated so as to correspond to the premium processing. Thereafter, processing by the processing unit 3B changes to the step SP 77 to return to the original processing procedure. Thus, in the shopping system 1, even in the case where preview of advertisement is carried out, it is possible to immediately use point after preview. Thus, point can be easily utilized accordingly, and service by point can be positively utilized.

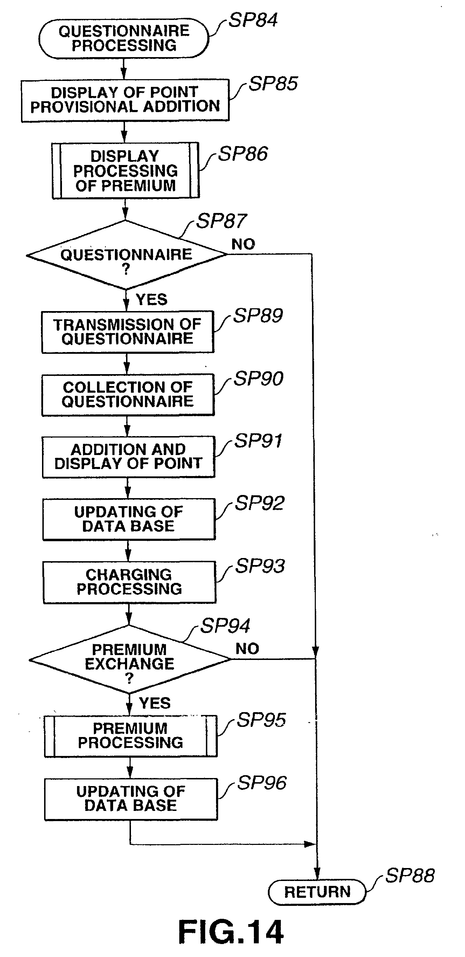

FIG. 14 is a flowchart showing processing procedure of questionnaire processing. In the case where user focuses on menu of questionnaire in which goods and premium are set, processing by the processing unit 3B changes from step SP 84 to step SP 85. When answer to the questionnaire is made at the step SP 85, the processing unit 3B displays message to the effect that number of bonus points is added to thereby improve willingness of answer to the questionnaire by user. It is to be noted that in the case where questionnaire information by request from client irrelevant to goods is recorded in the registered user data base 3CA, menu of questionnaire is similarly displayed in display by banner advertising of menu screen, etc. to execute this processing procedure by selection of this menu.

The processing unit 3B adds, at this step SP85, number of points of this selected questionnaire is added to current number of points similarly to the above-described matter at the step SP49 to thereby calculate, in this case, accumulated point in the case where information which is answer of questionnaire is notified. Further, the processing unit 3B notifies this calculated accumulated point to the used terminal 6 to display it. Processing by the processing unit 3B changes to step SP86 to execute display processing of premium by this accumulated point. It is to be noted that display processing of the premium in this case is executed in the same manner as the above-described display processing of premium in FIG. 10.

Thus, in this shopping system 1, such an approach is employed to notify in advance accumulated point in the case where answer is made with respect to the questionnaire to further notify premium which can be provided by this accumulated point to prompt user to make answer of questionnaire to thereby prompt positive participation to this shopping mall to thereby realize positive utilization of shopping mall.

The processing unit 3B which carries out processing as described above judges at the subsequent step SP87 whether or not user selects menu of this questionnaire to thereby judge whether or not user comprehends or acknowledges answer of this questionnaire. When the negative result is obtained at this step, processing by the processing unit 3B returns to step SP88 to return to the original processing procedure.

When the affirmative result is obtained at the step SP87, processing by the processing unit 3B changes to step SP89. Thus, the processing unit 3B transmits questionnaire to user by access of the user terminal 6 in accordance with recording of questionnaire information of the registered user data base 3BA, the goods data base 3BC or the premium data base 3CC.

Subsequently, the processing unit 3B collects answer of questionnaire at step SP90, and adds number of bonus point set with respect to answer of this questionnaire to current number of points of user at step SP91 to display this added point on the user terminal 6. Further, the processing unit 3B updates the data base 3C in a manner to correspond to these series of processing at the subsequent step SP92. Namely, the processing unit 3B updates recording of corresponding number of points of the registered user data base 3CA by the added point, and records utilization of questionnaire at questionnaire utilization information. Moreover, the processing unit 3B records answer of questionnaire in the data base 3C, and executes totalization processing of this answer to update recording of the data base 3C. Thus, in this shopping system 1, point is issued also with respect to questionnaire to promote utilization of questionnaire accordingly so that this system can be utilized for promotion of selling, etc., and to allow the shopping mall itself to be attractive to prompt positive utilization of service by point.

When the data base 3C is updated in this way, processing by the processing unit 3B changes to step SP93 to execute charging processing with respect to person who provides this questionnaire. Thereafter, processing by the processing unit 3B changes to step SP94. Thus, in this shopping system 1, charging processing is executed also with respect to questionnaire to make balance with respect to the person who provides premium where questionnaire is not carried out, and to make profit.

The processing unit 3B judges at the step SP94 whether or not menu for using point is selected by user. When the negative result is obtained at this step, processing by the processing unit 3B changes to the step SP88 to return to the original processing procedure. When the affirmative result is obtained at the step SP94, processing by the processing unit 3B changes to step SP95. Thus, the processing unit 3B executes the same premium processing as the above-described premium processing in FIG. 12. Further, at the subsequent step SP 96, the processing unit 3B updates the content of the data base 3C in a manner to correspond to premium processing. Thereafter, processing by the processing unit 3B changes to the step SP88 to return to the original processing procedure. Thus, in the shopping system 1, also at the time of carrying out questionnaire, it is possible to use point immediately after answer. Thus, point can be easily utilized accordingly, and service using point can be positively utilized.

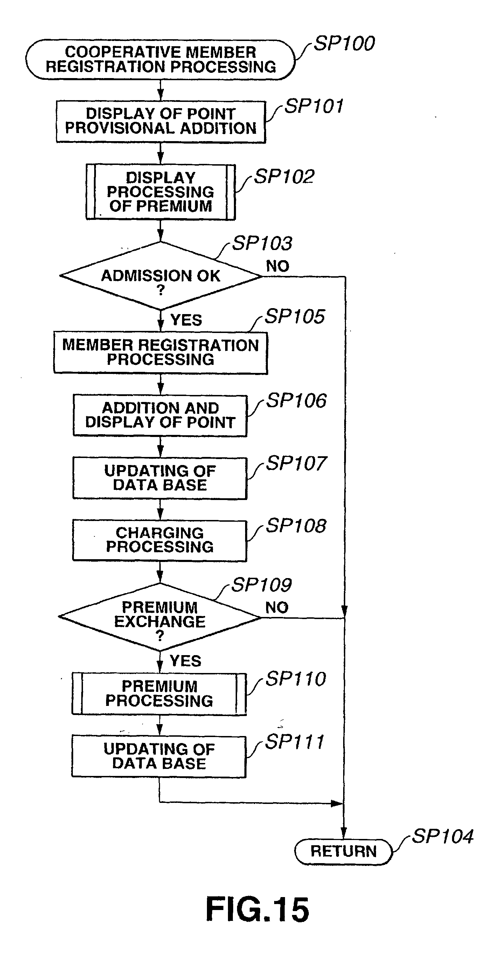

FIG. 15 is a flowchart showing affiliate member registration processing. When user focuses on menu relating to affiliate members, the processing unit 3B starts this processing procedure. Namely, processing by the processing unit 3B changes from step SP100 to step SP101. At the step SP 101, the processing unit 3B notifies current number of points and number of points which can be acquired as the result of the fact that user enters is registered as the affiliate member. Further, the processing unit 3B adds point by admission or joining to this current number of points to notify the added result to user to execute, at the subsequent step SP 102, the same processing as the above-described display processing of premium in FIG. 10 by this added point.

Thus, in this shopping system 1, such an approach is employed to notify in advance accumulated point in the case where user is registered as member to further notify premium which can be provider by accumulated point to hasten or promote admission to thereby hasten positive admission and utilization also with respect to the member system of this kind. Thus, positive utilization of shopping mall is utilized. Processing by the processing unit 3B subsequently changes to step SP 103 to judge at this step whether or not user clicks mouse on the focused menu to thereby judge whether or not user understands or acknowledges admission as this member. When the negative result is obtained at this step, processing by the processing unit 3B returns to step SP 104 to return to the original processing procedure.

When the affirmative result is obtained at the step SP 103, the processing unit 3B provides access to server which accepts registration of this member with respect to the member that user has selected to intervene data exchange between this server and the user terminal 6 to thereby accept registration by this server. When processing of the registration is normally completed, processing by the processing unit 3B changes to step SP 106. At this step, the processing unit 3B adds service point according to member registration to point of this user to display added result.

Further, the processing unit 3B updates data base 3C so as to correspond to these series of processing at the subsequent step SP 107. Namely, the processing unit 3B updates recording of corresponding number of points of the registered user data base 3CA by the added point, and records recording of member at affiliate member information. Thus, this shopping system 1 issues points also with respect to other member registrations to have ability to utilize in combination services by various membership systems accordingly to realize convenience of user, and to allow the shopping mall itself to be attractive. Also by these facts, positive utilization of the shopping mall is promoted.

When the data base 3C is updated in this way, processing by the processing unit 3B changes to step SP 108 to execute charging processing with respect to operating body of this affiliate member. Thereafter, processing by the processing unit 3B changes to step SP 109. Thus, this shopping system 1 executes charging processing also with respect to registration of the cooperative member to make a profit.

The processing unit 3B judges at the step SP 109 whether or not menu for using point is selected by user. When the negative result is obtained at this step, processing by the processing unit 3B changes to step SP 104 to return to the original processing procedure. On the contrary, when the affirmative result is obtained at the step SP 109, processing by the processing unit 3B changes to step SP 110 to execute the same premium processing as the above-described premium processing in FIG. 12. Further, at the subsequent step SP 111, the processing unit 3B updates the content of the data base 3C so as to correspond to the premium processing. Thereafter, processing by the processing unit 3B changes to the step SP 104 to return to the original processing procedure. Thus, in the shopping system 1, points can be utilized after registration even in the case where user is registered as the affiliate member. As a result, point can be easily utilized accordingly, and service by point can be positively utilized.

The processing unit 3B periodically executes charging processing for display of premium with respect to premium provider in addition to these processing. At this time, the processing unit 3B executes charging processing in accordance with recording of the premium data base 3CC to thereby execute charging processing by amount of money corresponding to frequency of notification to the user terminal 6.

### (2) Processing operation of the shopping system

In the above-described shopping system constituted as shown in FIG. 2, such an approach is employed to receive access from the user terminal 6 by the shopping server 3 to process this access by the processing unit 3B so that admission screen into the electronic mall is displayed on the user terminal 6. When user selects processing of admission on this picture, user ID is issued to this user in the shopping system 1. As a result, this user ID, registration date and user name are recorded into the registered user data base 3CA along with information of attribute showing feature of user such as sexuality, age and interest, etc. (see FIGS. 1 and 4). Thus, in the shopping system 1, this user is registered into the shopping server 3. As a result, it becomes possible to purchase various goods by control (management) of user ID and to further utilize point.

In this registration, in the shopping system 1, bonus point is set by registration. Thus, user is only registered as member so that point is assigned. Thus, in the shopping system 1, distinction from other shopping system is made, thereby making it possible to register many users as member.

By such registration as member, or admission as guest by selection on admission screen, on-line shopping by this shopping system 1 can be carried out in user, and goods that user desires are displayed along with picture image and explanation, etc. via various types of selection screens in accordance with operation of the user terminal 6 by user (see FIGS. 8 and 9). In these screen displays, the shopping system 1 displays current number of points recorded in the registered user data base 3CA. Thus, in the case where user utilizes various shopping sites, he can grasp the number of utilizable points with respect to these shopping sites at the time of start of utilization, and service using point can be positively utilized accordingly.

On the contrary, in the case where screen which actually selects goods is displayed in shopping, selection of article in which user is interested is accepted by provisional selection of article. As a result, accumulated number of points in the case where user purchases this article is displayed. Thus, user can select articles without separately calculating total number of points to simplify processing accordingly. In addition, as the result of the fact that the number of points after purchase is notified at the stage for selecting articles, positive utilization of service using point can be hastened or promoted accordingly, and positive utilization of this shopping system 1 can be hastened or promoted.

In notifying accumulated number of points calculated in this way, in the shopping system 1, premium which can be provided by accumulated number of points calculated in this way is notified to user by display processing of premium (FIG. 10). Thus, utilization will of point in user can be awakened. Also by this fact, positive utilization of this shopping system 1 can be hastened or promoted.

Further, in notification of this premium, such an approach is employed to preferentially notify premium suitable for user from the group of premiums which can be offered to service of points which are recorded in the premium data base 3CC to still more awaken utilization will of point, thus making it possible to hasten or promote positive utilization of the shopping system 1 through positive utilization of service by point.

In more practical sense, by selecting premium suitable for user from the group of premiums with attribute information recorded in the registered user data base 3CA being as reference, it is possible to preferentially notify premium suitable for taste or interest of user. Thus, positive utilization of the shopping system 1 can be hastened or promoted. Further, similarly, also by selecting premium suitable for user with goods purchase record or point use record recorded in the registered user data base 3CA being as reference, it is possible to preferentially notify, to user, premium suitable for taste or interest of user. Thus, positive utilization by user can be realized. In addition, current buying sentiment is reflected with respect to such preferential premium notification. Also by this fact, positive utilization is promoted.

In notification of premium in which such priority is set, such an approach is employed to switch premium to be notified in response to selective operation of user in the user terminal 6, thereby making it possible to freely select premium by user to allow utilization of service by point to be positive, and to promote purchase will of goods.

At this time, processing for notifying these premiums is executed by selecting premium from list of premiums recorded in the premium data base 3CC, whereby the content or destination of link, etc. of this premium data base 3CC is only updated by access of the client terminal 4, etc. in the shopping system 1, thereby making it possible to variously change premium offered to user. Thus, premiums are changed in various manners, e.g., for short time period. Also by this change, service by point is caused to be fascinating so that positive utilization can be realized.

As the result of the fact that processing as described above is carried out, premium and accumulated number of points are displayed in combination in the shopping system 1 to accept selection of goods. When purchase of article is fixed by user, processing of payment or sending, etc. is executed similarly to the processing in ordinary on-line shopping, and number of points by purchase of article is added with respect to corresponding user so that recording of registered user data base 3CA is added. In addition, purchase of goods is recorded in the goods purchase record, and selling of goods is similarly recorded with respect to the goods data base 3CB.

In the shopping system 1 to which this invention is applied, when use of point is instructed by user thereafter, processing of sending, etc. is executed with respect to the premiums selected by user. At this time, in this shopping system 1, premium which can be acquired by current number of points is notified to user by establishment of priority with attribute information, goods purchase record and point utilization record, etc. being as reference similarly to that at the time of selection of goods. Thus, user can use point immediately after purchase of goods as occasion demands. As a result, use of this point is permitted to be attractive and convenient. Further, this shopping system 1 is also permitted to be attractive and convenient.

At this time, in the shopping system 1, in the case where user selects premium in advance at the time of selection of goods, selection screen of premium is displayed again with the selected premium displayed preferentially, thereby making it possible to omit repetitive selective work in the case where premium is selected in advance. Further, it is possible to select premium for a second time as occasion demands. Thus, convenience of use can be improved accordingly.

In addition, points and point utilization record in the registered user data base 3CA are updated by exchange of premium. Thus, it is possible to profit in selection of premium which is provided at the subsequent time of utilization of the shopping mall. Further, premium buying sentiment list in the premium data base 3CC is updated. Also by this updating, it is possible to profit in selection of premium which is provided at the subsequent time of utilization of the shopping mall. Further, it is possible to profit in grasp of the market for premium provider.

At the time of selection of goods and at the time selection of premium which have been mentioned above, in the shopping system 1, in the case where questionnaire and advertisement are set in premiums by premium provider, etc., menus of these questionnaire and advertisement are displayed as display of premium, etc. Further, menus for selecting these questionnaire and advertisement are also displayed on the initial screen. In the shopping system 1, when these menus are focused, notification to the effect that point is set also with respect to answer of questionnaire and preview of advertisement is made. Further, at the same time, current number of points is notified. In addition, in the case where answer is made with respect to questionnaire, and in the case where preview of advertisement is made, accumulated number of points is further notified. Thus, in this shopping system 1, answer of questionnaire and preview of advertisement are positively hastened or promoted. Also by utilization thereof, positive utilization by user is hastened or promoted.

Accumulated number points is notified in this way and premium which can be provided by accumulated number of points is notified similarly to that at the time of selection of goods, and notification of this premium is executed in such a manner that premium suitable for user is caused to be preferential. Also by execution of such notification, in this shopping system 1, answer of questionnaire and preview of advertisement are positively hastened or promoted, and positive utilization by user is hastened or promoted.

In the shopping system to which this invention is applied, when confirmation is obtained with respect to answer of questionnaire and preview of advertisement which have been described above, display of the user terminal 6 is switched so as to have ability to answer questionnaire and to have ability to make preview of advertisement by access via link, etc. Thus, in the shopping system 1, premium provider effectively utilize the opportunity of providing premium to acquire information of the market to have ability to profit in product development and to have ability to profit in advertisement.

In the shopping system 1, bonus point is added for person who answers questionnaire and person who previews advertisement which have been described above, and this added number of points is recorded in the registered user data base 3CA. Further, answer of questionnaire and preview of advertisement which have been described above are recorded in the data base 3C. In addition, in the questionnaire, totalized result is. recorded in the data base 3C. Thus, in the shopping system 1, it is possible to positively develop questionnaire and advertisement. When viewed from the user side, answer is made with respect to questionnaire, or preview of advertisement is made to have ability to obtain point. As a result, positive utilization of service by point can be still more realized, and differentiation from other shopping site can be realized.

Even in the case where point is obtained by such questionnaire and advertisement, point can be immediately utilized in the shopping system 1. Also by such utilization, positive utilization of point can be realized.

In the shopping system 1 to which this invention is applied, charging processing is executed by the premium provider in which questionnaire and advertisement are set with respect to answer of questionnaire and preview of advertisement which have been described above. Thus, also in such processing of questionnaire, etc., it is possible to secure profit individually. In addition to such individual charging, charging processing is periodically executed with respect to recording into the premium data base 3CC. Also by such execution, profit can be provided.

In addition to these processing, in the shopping system 1, menu for recommending admission to affiliate member of department store, etc. is displayed. When this menu is focused by user, notification to the effect that point is set also with respect to such admission is made. At the same time, similarly to notification at the time of selection of goods, current number of points is notified, and accumulated number of points in the case where user is registered as member and premium which can be provided by this accumulated number of points are notified in a manner to have preference to premium suitable for user. Also by this notification, in this shopping system 1, registration as member of this kind is positively promoted, and positive utilization by user is promoted.

In the shopping system 1 which carries out processing as described above, when confirmation is obtained by user, registration processing of the affiliate member is executed by data exchange of client terminal 4, etc. for using system of this cooperative member through the intervention of shopping server 3 of this shopping system 1.

Also in this processing, in the shopping system 1, bonus point is added by joining to the affiliate member, and this added point is recorded in the registered user data base 3CA. Further, such registration of member is recorded in the registered user data base 3CA. Thus, in the shopping system 1, it is possible to positively develop service in cooperation with member system which positively develops various types of services.

Even in the case where point is obtained by such joining to the affiliate member, point can be immediately utilized in the shopping system 1. Also by such utilization, positive utilization of point can be realized. Charging processing is implemented to enterprise which operates corresponding member system is executed with respect to such joining to the affiliate member. Thus, also in such processing for admission of member, profit can be individually secured.

The shopping system constituted as described above notifies object to be provided of point of goods, preview of advertisement, answer to questionnaire or guidance for admission, etc. to notify in advance accumulated number of points which notifies accumulated number of points in the case where information corresponding thereto is notified to thereby promote positive utilization of service using point, thus making it possible to realize differentiation from other shopping site, etc. By these facts, positive utilization of user in this shopping site can be realized.

Moreover, by accepting selection of point offered object to notify accumulated number of points, points in the case where article, etc. in which user is interested can be notified. Also by this fact, positive utilization of service by point is promoted. Thus, positive utilization of this shopping system 1 can be promoted. Also by notifying, to user, premium which is reward or remuneration which can be provided by accumulated number of points notified in this way, positive utilization of service using point is promoted. Thus, positive utilization of this shopping system can be promoted.

Further, also by preferentially notifying reward or remuneration suitable for user based on information of attribute indicating feature of user, or on list, etc. of record of premium acquisition, positive utilization of service by point is promoted. Thus, positive utilization of this shopping system 1 can be promoted. By executing charging processing with respect to corresponding premium provider, etc. in connection with such notification of reward or remuneration, individual profit can be made from such premium provider, etc., and consciousness with respect to this shopping system of the premium provider, etc. is caused to be high. By providing of attractive premium, etc., positive utilization of this shopping system 1 can be promoted.

While explanation has been given by the example where preview of advertisement can be made with respect to premium in the above-described system, this invention is not limited to such an example. This invention may set advertisement with respect to goods, and may set advertisement irrespective of these premium and goods.

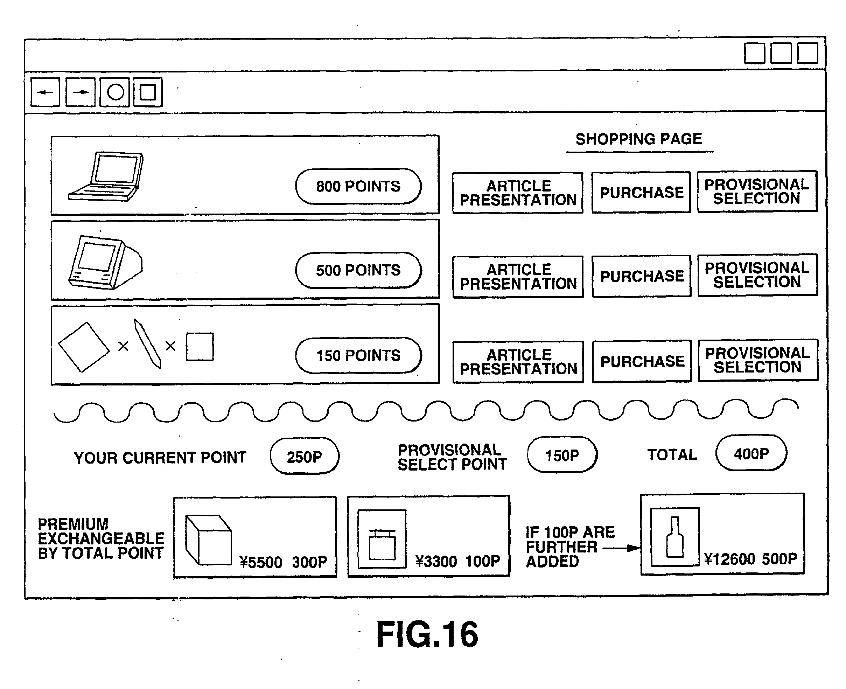

Further, while explanation has been given in connection with the case where premium can be selected before and after purchase of goods in the above-described shopping system, this invention is not limited to this example, but premium may be selected only after purchase of goods. In this case, at the time of selection of goods, it is conceivable to employ an approach to provide display screen as shown in FIG. 16 to notify example of premium which can be exchanged by accumulated point. On this display screen of FIG. 16, buttons for switching screen, etc. are displayed at the uppermost column, and display for carrying out presentation of goods are successively carried out along with points. Further, in line with displays of respective goods, article presentation menu for opening article presentation, menu for purchase and menu for provisional selection are displayed. Further, at the lower portions of these displays, current point, point by provisionally selected article and total point are displayed, and examples of premiums which can be acquired by these points are displayed.

In addition, while, in the above-described shopping system, explanation has been given in connection with the case where accumulated point of is notified by processing of the server side to further notify premium suitable for user, this invention is not limited to this example, but various information necessary for processing may be acquired from the server side to execute these processing by processing of the terminal side.

### Industrial Applicability

As described above, this invention notifies, to user, in advance, accumulated point in the case where, e.g., a series of information, etc. according to purchase of goods are notified, thereby making it possible to realize positive utilization of user.

## Claims

1. An information processing method of accumulating, with respect to notification of a predetermined information from a terminal equipment, point corresponding to the information to offer reward to user of the terminal equipment in accordance with the accumulated point, the information processing method including:
a notification step of notifying offered object of the point; and
an accumulated point notification step of notifying accumulated point in the case where the predetermined information is notified.

2. The information processing method as set forth in claim 1, wherein the accumulated point notification step includes a step of accepting selection of offered object of the point to notify the accumulated point with respect to the selected offered object.

3. The information processing method as set forth in claim 1, wherein the offered object of the point is goods, and the predetermined information is a series of information relating to purchase procedure of the goods.

4. The information processing method as set forth in claim 1, wherein the offered object of the point is questionnaire, and the predetermined information is answer to the questionnaire.

5. The information processing method as set forth in claim 1, wherein the offered object of the point is admission guidance for a predetermined member, and the predetermined information is notification of registration as the member.

6. The information processing method as set forth in claim 1, wherein the offered object of the point is preview of a predetermined advertisement, and the predetermined information is notification of preview of the advertisement.

7. The information processing method as set forth in claim 1, wherein the reward is premium.

8. The information processing method as set forth in claim 1, wherein the accumulated point notification step includes a reward notification step of notifying, to the user, reward which can be offered by the accumulated point.

9. The information processing method as set forth in claim 1, wherein the accumulated point notification step includes a reward notification step of preferentially notifying reward suitable for user who operates the terminal equipment.

10. The information processing method as set forth in claim 9, wherein, at the reward notification step, reward suitable for the user is preferentially notified based on information of attribute indicating feature of the user.

11. The information processing method as set forth in claim 9, wherein, at the reward notification step, reward suitable for the user is preferentially notified based on record of notification of the predetermined information.

12. The information processing method as set forth in claim 9, wherein, at the reward notification step, reward suitable for the user is preferentially notified based on record of offer of the reward.

13. The information processing method as set forth in claim 1, which includes a charging step of executing charging processing with respect to provider of the reward.

14. The information processing method as set forth in claim 3, which includes a charging step of executing charging processing with respect to a provider of the goods.

15. The information processing method as set forth in claim 4, which includes a charging step of executing charging processing with respect to client of the questionnaire.

16. The information processing method as set forth in claim 5, which includes a charging step of executing charging processing with respect to a provider of the admission guidance.

17. The information processing method as set forth in claim 6, which includes a charging step of executing charging processing with respect to a provider of the advertisement.

18. An information processing apparatus adapted to accumulate, with respect to notification of a predetermined information from a terminal equipment, point corresponding to the information to offer reward to user of the terminal equipment in accordance with the accumulated point, the information processing apparatus including:
notifying means for notifying offered object of the point; and
accumulated point notifying means for notifying the accumulated point in the case where the predetermined information is notified.

19. The information processing apparatus as set forth in claim 18, wherein the accumulated point notifying means accepts selection of the offered object of the point to notify the accumulated point with respect to the selected offered object.

20. The information processing apparatus as set forth in claim 18, wherein the accumulated point notifying means notifies, to the user, reward which can be provided by the accumulated point.

21. The information processing apparatus as set forth in claim 18, wherein the accumulated point notifying means preferentially notifies reward suitable for user who operates the terminal equipment.

22. A recording medium adapted so that there is recorded an information processing method of accumulating, with respect to notification of a predetermined information from a terminal equipment, point corresponding to the information to offer reward to user of the terminal equipment in accordance with the accumulated point,
the information processing method including:
a notification step of notifying offered object of the point; and
an accumulated point notification step of notifying the accumulated point in the case where the predetermined information is notified.

23. The recording medium as set forth in claim 22, wherein, at the accumulated point notification step, selection of offered object of the point is accepted to notify the accumulated point with respect to the selected offered object.

24. The recording medium as set forth in claim 22, wherein, at the accumulated point notification step, reward which can be provided by the accumulated point is notified to the user.

25. The recording medium as set forth in claim 22, wherein, at the accumulated point notification step, reward suitable for user who operates the terminal equipment is preferentially notified.

26. An information processing method of accessing a predetermined server, wherein the server accumulates, with respect to notification of a predetermined information from a terminal equipment, point corresponding to the information to offer reward to user of the terminal equipment in accordance with the accumulated point, and
wherein the information processing method includes a point accumulating step of calculating accumulated point in the case where the predetermined information is notified to the server by information acquired from the server, and an accumulated point notification step of notifying the accumulated point to the user.

27. The information processing method as set forth in claim 26, wherein the accumulated point notification step includes a step of accepting selection of offered object of the point to notify the accumulated point with respect to the selected offered object.

28. The information processing method as set forth in claim 26, wherein the offered object of the point is article, and the predetermined information is a series of information relating to procedure of purchase of the article.

29. The information processing method as set forth in claim 26, wherein offered object of the point is questionnaire, and the predetermined information is answer to the questionnaire.

30. The information processing method as set forth in claim 26, wherein offered object of the point is admission guidance for a predetermined member, and the predetermined information is notification for registration as the member.

31. The information processing method as set forth in claim 26, wherein offered object of the point is preview of a predetermined advertisement, and the predetermined information is notification of preview of the advertisement.

32. The information processing method as set forth in claim 26, wherein the reward is premium.

33. The information processing method as set forth in claim 26, wherein the accumulated point notification step includes a reward notification step of notifying, to the user, reward which can be provided by the accumulated point.

34. The information processing method as set forth in claim 26, wherein the accumulated point notification step includes a reward notification step of preferentially notifying reward suitable for the user.

35. The information processing method as set forth in claim 34, wherein, at the reward notification step, reward suitable for the user is preferentially notified based on information of attribute indicating feature of the user.

36. The information processing method as set forth in claim 34, wherein, at the reward notification step, reward suitable for the user is preferentially notified based on record of notification of the predetermined information.

37. The information processing method as set forth in claim 34, wherein, at the reward notification step, reward suitable for the user is preferentially notified based on record of offer of the reward.

38. An information processing apparatus adapted for accessing a predetermined server, wherein the server accumulates, with respect to a predetermined information from a terminal equipment, point corresponding to the information to offer reward to user of the terminal equipment in accordance with the accumulated point, and
wherein the information processing apparatus includes point accumulating means for calculating accumulated point in the case where the predetermined information is notified to the server by information acquired from the server, and accumulated point notifying means for notifying the accumulated point to the user.

39. The information processing apparatus as set forth in claim 38, wherein the accumulated point notifying means accepts selection of offered object of the point to notify the accumulated point with respect to the selected offered object.

40. The information processing apparatus as set forth in claim 38, wherein the accumulated point notifying means notifies, to the user, reward which can be provided by the accumulated point.

41. The information processing apparatus as set forth in claim 38, wherein the accumulated point notifying means preferentially notifies reward suitable for user who operates the terminal equipment.

42. A recording medium adapted so that an information processing method of accessing a predetermined server is recorded, wherein the server accumulates, with respect to notification of a predetermined information from a terminal equipment, point corresponding to the information to offer reward to user of the terminal equipment in accordance with the accumulated point, and
wherein the information processing method includes a point accumulating step of calculating the accumulated point in the case where the predetermined information is notified to the server by information acquired from the server, and an accumulated point notification step of notifying the accumulated point to the user.

43. The recording medium as set forth in claim 42, wherein, at the accumulated point notification step, selection of offered object of the point is accepted to notify the accumulated point with respect to the selected offered object.

44. The recording medium as set forth in claim 42, wherein, at the accumulated point notification step, reward which can be provided by the accumulated point is notified to the user.

45. The recording medium as set forth in claim 42, wherein, at the accumulated point notification step, reward suitable for the user is preferentially notified.
